# FASCICULE DE BREVET EUROPEEN

(11) **EP 1 045 336 B1**
(45) Date de publication et mention de la délivrance du brevet: **03.09.2008**
(21) Numéro de dépôt: 00410035.0
(22) Date de dépôt: 06.04.2000
(51) Int. Cl.: G06K 19/07, G06K 7/00

(54) **Fonctionnement en couplage très proche d'un système à transpondeur électromagnétique**
Enggekoppeltes Betriebsverfahren eines elektromagnetischen Transpondersystem
Close-coupled method of operation of an electromagnetic transpondersystem

(30) Priorité: 07.04.1999 FR 9904548
(43) Date de publication de la demande: 18.10.2000
(73) Titulaire: STMicroelectronics S.A., 92120 Montrouge (FR)
(72) Inventeur: Wuidart, Luc, 83910 Pourrières (FR); Bardouillet, Michel, 13790 Rousset (FR); Enguent, Jean-Pierre, 13119 Saint Savournin (FR)
(74) Mandataire: de Beaumont, Michel

(56) Documents cités:
- EP-A- 0 706 151
- EP-A- 0 722 094
- FR-A- 2 757 952

## Description

La présente invention concerne des systèmes utilisant des transpondeurs électromagnétiques, c'est-à-dire des émetteurs-récepteurs (généralement mobiles) susceptibles d'être interrogés, sans contact et sans fil, par une unité (généralement fixe), dite borne de lecture et/ou d'écriture. L'invention concerne, plus particulièrement, des transpondeurs dépourvus d'alimentation autonome. Ces transpondeurs extraient l'alimentation nécessaire aux circuits électroniques qu'ils comportent du champ haute fréquence rayonné par une antenne de la borne de lecture et d'écriture. L'invention s'applique à de tels transpondeurs, qu'il s'agisse de transpondeurs à lecture seule, c'est-à-dire propres à fonctionner avec une borne se contentant de lire les données du transpondeur, ou à des transpondeurs à lecture-écriture qui contiennent des données qui peuvent être modifiées par la borne.

Les transpondeurs électromagnétiques sont basés sur l'emploi de circuits oscillants comprenant un enroulement formant antenne, côté transpondeur et côté borne de lecture-écriture. Ces circuits sont destinés à être couplés par champ magnétique proche lorsque le transpondeur entre dans le champ de la borne de lecture-écriture. La portée d'un système à transpondeur, c'est-à-dire la distance maximale de la borne à laquelle un transpondeur est activé (réveillé) dépend, notamment, de la taille de l'antenne du transpondeur, de la fréquence d'excitation de la bobine du circuit oscillant engendrant le champ magnétique, de l'intensité de cette excitation, et de la consommation en puissance du transpondeur.

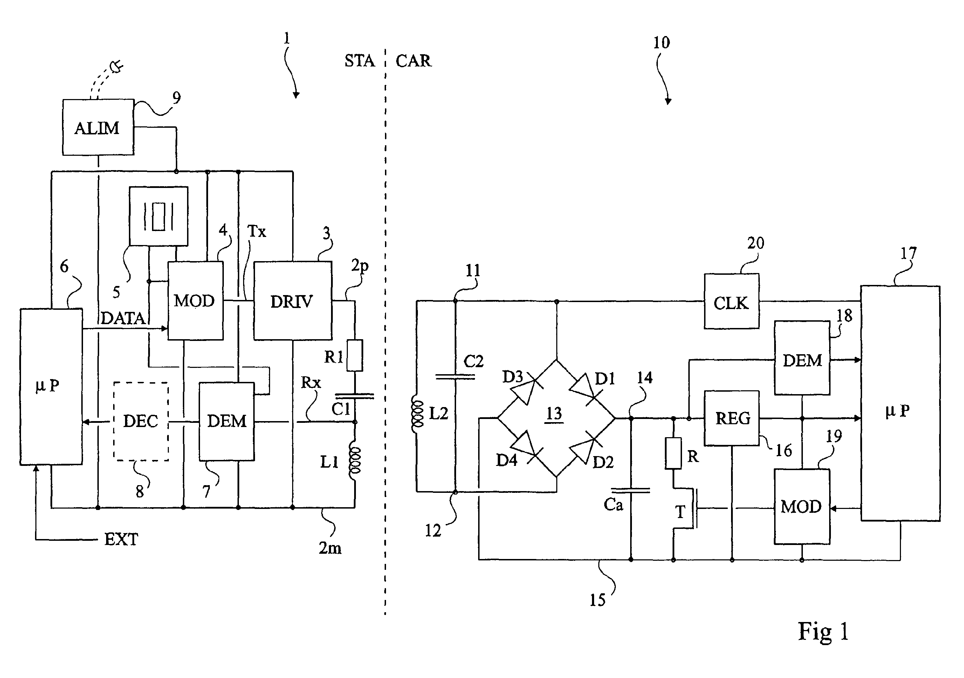

La figure 1 représente, de façon très schématique et fonctionnelle, un exemple classique de système d'échange de données entre une borne 1 de lecture-écriture (STA) et un transpondeur 10 (CAR).

Généralement, la borne 1 est essentiellement constituée d'un circuit oscillant formé d'une inductance L1, en série avec un condensateur C1 et une résistance R1, entre une borne 2p de sortie d'un amplificateur ou coupleur d'antenne 3 (DRIV) et une borne 2m à un potentiel de référence (généralement, la masse). L'amplificateur 3 reçoit un signal Tx de transmission haute fréquence, issu d'un modulateur 4 (MOD). Le modulateur reçoit une fréquence de référence, par exemple d'un oscillateur à quartz 5 et, si besoin, un signal DATA de données à transmettre. En l'absence de transmission de données de la borne 1 vers le transpondeur 10, le signal Tx sert uniquement de source d'énergie pour activer le transpondeur si celui-ci passe dans le champ. Les données à transmettre proviennent généralement d'un système numérique, par exemple, un microprocesseur 6 (µP).

Le point de connexion du condensateur C1 et de l'inductance L1 constitue, dans l'exemple représenté à la figure 1, une borne de prélèvement d'un signal Rx de données, reçues d'un transpondeur 10 à destination d'un démodulateur 7 (DEM). Une sortie du démodulateur communique (le cas échéant par l'intermédiaire d'un décodeur (DEC) 8) les données reçues du transpondeur 10 au microprocesseur 6 de la borne de lecture-écriture 1. Le démodulateur 7 reçoit, généralement de l'oscillateur 5, un signal d'horloge ou de référence pour une démodulation de phase. Le cas échéant, la démodulation est effectuée à partir d'un signal prélevé entre le condensateur C1 et la résistance R1, et non aux bornes de l'inductance L1. Le microprocesseur 6 communique (bus EXT) avec différents circuits d'entrée/sortie (clavier, écran, moyen de transmission vers un serveur, etc.) et/ou de traitement. Les circuits de la borne de lecture-écriture tirent l'énergie nécessaire à leur fonctionnement d'un circuit d'alimentation 9 (ALIM) raccordé, par exemple, au réseau de distribution électrique.

Côté transpondeur 10, une inductance L2, en parallèle avec un condensateur C2, forme un circuit oscillant parallèle (appelé circuit résonant en réception), destiné à capter le champ magnétique engendré par le circuit oscillant série L1C1 de la borne 1. Le circuit résonant (L2, C2) du transpondeur 10 est accordé sur la fréquence de résonance du circuit oscillant (L1, C1) de la borne 1.

Les bornes 11, 12 du circuit résonant L2C2 qui correspondent aux bornes du condensateur C2, sont reliées à deux bornes d'entrée alternative d'un pont redresseur 13 constitué, par exemple, de quatre diodes D1, D2, D3, D4. Dans la représentation de la figure 1, l'anode de la diode D1 est connectée à la borne 11, de même que la cathode de la diode D3. L'anode de la diode D2 et la cathode de la diode D4 sont connectées à la borne 12. Les cathodes des diodes D1 et D2 constituent une borne positive 14 de sortie redressée. Les anodes des diodes D3 et D4 constituent une borne de référence 15 de la tension redressée. Un condensateur Ca est connecté aux bornes de sortie redressée 14, 15 du pont 13 de façon à stocker de l'énergie et à lisser la tension redressée délivrée par le pont. On notera que le pont de diodes peut être remplacé par un montage de redressement monoalternance.

Quand le transpondeur 10 se trouve dans le champ de la borne 1, une tension haute fréquence est engendrée aux bornes du circuit résonant L2C2. Cette tension, redressée par le pont 13 et lissée par le condensateur Ca, fournit une tension d'alimentation à des circuits électroniques du transpondeur par l'intermédiaire d'un régulateur de tension 16 (REG). Ces circuits comprennent généralement, essentiellement, un microprocesseur (µP) 17 (associé à une mémoire non représentée), un démodulateur 18 (DEM) des signaux éventuellement reçus de la borne 1, et un modulateur 19 (MOD) pour transmettre des informations à la borne 1. Le transpondeur est généralement synchronisé au moyen d'une horloge (CLK) extraite, par un bloc 20, du signal haute fréquence récupéré aux bornes du condensateur C2, avant redressement. Le plus souvent, tous les circuits électroniques du transpondeur 10 sont intégrés dans une même puce.

Pour transmettre des données du transpondeur 10 vers la borne 1, le modulateur 19 commande un étage de modulation (rétromodulation) du circuit résonant L2C2. Cet étage de modulation est généralement constitué d'un interrupteur électronique (par exemple, un transistor T) et d'une résistance R, en série entre les bornes 14 et 15. Le transistor T est commandé à une fréquence (par exemple, 847,5 kHz) dite sous-porteuse, nettement inférieure (généralement avec un rapport d'au moins 10) à la fréquence du signal d'excitation du circuit oscillant de la borne 1 (par exemple, 13,56 MHz). Lorsque l'interrupteur T est fermé, le circuit oscillant du transpondeur est soumis à un amortissement supplémentaire par rapport à la charge constituée des circuits 16, 17, 18, 19 et 20, de sorte que le transpondeur prélève une quantité d'énergie plus importante du champ magnétique haute fréquence. Côté borne 1, l'amplificateur 3 maintient constante l'amplitude du signal d'excitation à haute fréquence. Par conséquent, la variation d'énergie du transpondeur se traduit par une variation d'amplitude et de phase du courant dans l'antenne L1. Cette variation est détectée par le démodulateur 7 de la borne 1 qui est soit un démodulateur de phase, soit un démodulateur d'amplitude. Par exemple, dans le cas d'une démodulation de phase, le démodulateur détecte, dans les demi-périodes de la sous-porteuse où l'interrupteur T du transpondeur est fermé, un léger déphasage (quelques degrés, voire moins d'un degré) de la porteuse du signal Rx par rapport au signal de référence. La sortie du démodulateur 7 (généralement la sortie d'un filtre passe-bande centré sur la fréquence de la sous-porteuse) restitue alors un signal image du signal de commande de l'interrupteur T qui peut être décodé (par le décodeur 8 ou directement par le microprocesseur 6) pour restituer les données binaires.

On notera que la borne ne transmet pas de données pendant qu'elle en reçoit d'un transpondeur, la transmission de données s'effectuant alternativement dans un sens puis dans l'autre (semi-duplex).

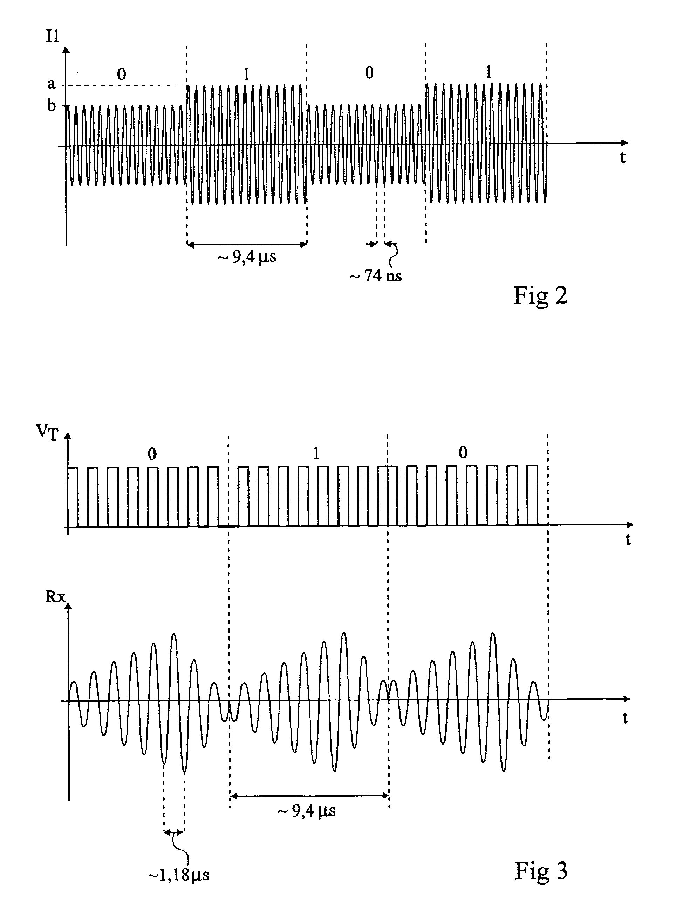

La figure 2 illustre un exemple classique de transmission de données de la borne 1 vers un transpondeur 10. Cette figure représente un exemple d'allure du signal d'excitation de l'antenne L1 pour une transmission d'un code 0101. La modulation couramment utilisée est une modulation d'amplitude avec un débit de 106 kbit/s (un bit est transmis en environ 9,5 µs) nettement inférieur à la fréquence (par exemple, 13,56 MHz) de la porteuse provenant de l'oscillateur 5 (période d'environ 74 ns). La modulation d'amplitude s'effectue, soit en tout ou rien, soit avec un taux de modulation (défini comme étant la différence des amplitudes crêtes (a, b) entre les deux états (0 et 1), divisée par la somme de ces amplitudes) inférieur à l'unité en raison du besoin d'alimentation du transpondeur 10. Dans l'exemple de la figure 2, la porteuse à 13,56 MHz est modulée, avec un débit de 106 kbit/s, en amplitude avec un taux de modulation tm de, par exemple, 10%.

La figure 3 illustre un exemple classique de transmission de données du transpondeur 10 vers la borne 1. Cette figure illustre un exemple d'allure du signal V_{T} de commande du transistor T, fourni par le modulateur 19, et du signal correspondant Rx reçu par la borne 1. Côté transpondeur, la rétromodulation est généralement de type résistif avec une porteuse (dite sous-porteuse) de, par exemple, 847,5 kHz (période d'environ 1,18 µs). La rétromodulation est, par exemple, basée sur un codage de type BPSK (codage binaire par saut de phase) à un débit de l'ordre de 106 kbit/s nettement inférieur à la fréquence de la sous-porteuse. A la figure 3, le signal Rx a été représenté "lissé", c'est-à-dire sans faire apparaître les ondulations de la porteuse haute fréquence (par exemple à 13,56 MHz). Dans l'exemple de la figure 3, on a considéré que chacun des trois bits représentés était différent du bit précédent. Ainsi, il s'agit, par exemple, d'une transmission d'un code 010.

On notera que, quel que soit le type de modulation ou de rétromodulation utilisé (par exemple, d'amplitude, de phase, de fréquence) et quel que soit le type de codage des données (NRZ, NRZI, Manchester, ASK, BPSK, etc.), celle-ci s'effectue de façon numérique, par saut entre deux niveaux binaires.

Les circuits oscillants de la borne et du transpondeur sont généralement accordés sur la fréquence de la porteuse, c'est-à-dire que leur fréquence de résonance est réglée sur la fréquence de 13,56 MHz. Cet accord a pour objet de maximiser la diffusion d'énergie vers le transpondeur, généralement, une carte de format type carte de crédit intégrant les différents constituants du transpondeur.

Comme l'illustre la figure 3, le signal V_{T} est constitué d'un train d'impulsions à la fréquence de la sous-porteuse (par exemple 847,5 kHz), un saut de phase intervenant à chaque changement d'état d'un bit au bit suivant. Pour ce qui est du signal récupéré côté lecteur, on constate que celui-ci n'a pas une forme "numérique", ce qui peut rendre difficile son décodage. En effet, l'allure du signal Rx a, à chaque temps (9,4 µs) de transmission d'un bit, un début de croissance non linéaire (en charge de capacité) jusqu'à un maximum environ au deux tiers de la durée d'un bit, puis une décroissance également non linéaire. Le temps d'établissement, c'est-à-dire le temps mis par le signal Rx à atteindre un niveau décodable par le démodulateur, est lié au fait que les circuits oscillants sont accordés. Le besoin de transfert d'énergie pour la téléalimentation, associé à la portée souhaitée pour le système, impose un facteur de qualité élevé, donc que les circuits oscillants soient accordés. Or, un facteur de qualité élevée entraîne une faible bande passante. Il en découle un débit de données limité pour le système. Généralement, les facteurs de qualité sont de l'ordre de 10 pour le lecteur et pour le transpondeur.

Le transpondeur peut être constitué par divers objets (porte-clés, clés, etc.), mais est le plus souvent aujourd'hui une carte du format d'une carte de crédit qui intègre tous les circuits et l'antenne ou inductance L2. Pour un échange d'informations avec un lecteur ou borne, la carte est approchée de l'antenne L1 du lecteur. La distance entre le lecteur et la carte varie et, dans certaines applications, on utilise une transmission en couplage très proche ou serré, les antennes étant distantes l'une de l'autre de moins de deux centimètres. Une telle transmission en couplage serré peut être utilisée, par exemple, pour valider un paiement au moyen d'un transpondeur, et garantir ainsi que seul le transpondeur le plus proche de la borne est reconnu par celle-ci.

Un problème qui se pose lorsque les circuits oscillants sont très proches l'un de l'autre est que, s'ils sont sensiblement accordés, l'énergie transmise de la borne vers le transpondeur est telle que celui-ci chauffe (l'antenne L2 est généralement constituée d'une ou plusieurs spires planes en périphérie de la carte). Cet effet thermique a pour conséquence une déformation de la carte en matière plastique.

Le document EP-A-0 706 151 décrit un système à transpondeur électromagnétique comportant des moyens de désaccord du circuit oscillant du transpondeur.

La présente invention vise à proposer une nouvelle solution qui pallie aux inconvénients des solutions classiques lorsqu'un transpondeur se trouve en relation de couplage très proche avec une borne de lecture-écriture.

La présente invention vise en particulier à minimiser l'effet thermique lié à la téléalimentation du transpondeur par la borne de lecture-écriture.

La présente invention vise également à ce que la solution proposée permette une augmentation du débit de transmission de données lorsque le transpondeur est très proche de la borne.

La présente invention vise en outre à proposer une solution qui puisse être mise en oeuvre côté borne et/ou côté transpondeur.

Une caractéristique de la présente invention est de désaccorder les circuits oscillants de la borne et/ou du transpondeur lorsque ceux ci se trouvent dans une relation de couplage très proche, ou serré.

Un désaccord en fréquence d'un transpondeur électromagnétique est connu du document WO-A-98/29760. Ce document prévoit que l'antenne d'un transpondeur soit "désaccordée en fréquence ou désadaptée en impédance, de sorte que le transpondeur et son circuit électronique absorbent moins de champ radio et d'énergie. Ainsi, un autre transpondeur situé à proximité du transpondeur désadapté ou désaccordé pourra recevoir suffisamment de champ radio et d'énergie pour fonctionner correctement. Le système de transmission pourra alors détecter ou consulter cet autre transpondeur comme s'il se trouvait seul dans le champ de l'émetteur. Toujours selon ce document, les moyens de désadaptation sont mis en oeuvre "lorsque le transpondeur est dans un état non sélectionné afin de limiter l'absorption d'énergie et/ou de champ par le transpondeur dans l'état non sélectionné."

La solution préconisée par ce document revient à désaccorder les transpondeurs relativement lointains de la borne pour maximiser l'énergie reçue par le transpondeur le plus proche devant communiquer avec la borne. Une telle solution ne résout pas les problèmes susmentionnés de couplage serré. En effet, le transpondeur qui reste accordé est le transpondeur sélectionné.

A l'inverse de ce document, la présente invention prévoit un fonctionnement désaccordé en couplage serré. Ainsi, une caractéristique de la présente invention est de prévoir, pour une transmission d'informations en couplage serré, un fonctionnement désaccordé des circuits oscillants d'une borne de lecture (ou de lecture-écriture) et d'un transpondeur électromagnétique télé-alimenté par cette borne.

La présente invention tient compte du fait que l'énergie de téléalimentation récupérée côté transpondeur, n'est pas une fonction monotone de la distance qui sépare le transpondeur de la borne.

En effet, quand les circuits oscillants sont accordés sur la fréquence de la porteuse de téléalimentation, si le transpondeur se rapproche d'une borne, l'amplitude de la téléalimentation commence par croître depuis la limite de portée du système (de l'ordre d'une dizaine de centimètres). Cette amplitude passe par un maximum (position de couplage critique) puis se met à diminuer de nouveau quand le transpondeur devient très proche (environ, moins de 2 centimètres). C'est notamment pour cette raison que, dans les systèmes classiques, on ne prévoit pas de rendre la puissance de la borne dépendante de la distance à laquelle se trouve le transpondeur.

La position de couplage critique correspond à la distance à laquelle le couplage entre le transpondeur et la borne est optimisé par une amplitude de téléalimentation maximale reçue par le transpondeur lorsque les circuits oscillants de la borne et du transpondeur sont tous deux accordés sur la fréquence de la porteuse de téléalimentation. En d'autres termes, la position de couplage critique correspond à la distance où l'énergie de téléalimentation est maximale pour un facteur de couplage minimal, le facteur de couplage étant le rapport de la mutuelle inductance sur la racine carré du produit des inductances des circuits oscillants.

Quand au moins un des circuits oscillants est désaccordé de la fréquence de la porteuse de téléalimentation, l'énergie reçue par le transpondeur augmente au fur et à mesure que la distance de la borne diminue, mais avec une portée réduite. Dans ce cas, il existe également une distance à laquelle l'énergie reçue est maximale pour une condition de désaccord donnée. On parle de couplage optimal, la position de couplage critique étant la position de couplage optimal quand les deux circuits oscillants sont accordés sur la fréquence de la porteuse. On notera que le coefficient de couplage optimal entre les deux circuits oscillants dépend non seulement des inductances L1 et L2, des condensateurs C1 et C2 et de la fréquence (qui est ici fixe et correspond à la fréquence de la porteuse), mais également de la résistance série R1 de la borne, et de la charge du circuit oscillant du transpondeur, c'est-à-dire de la résistance équivalente des circuits (microprocesseur, etc.) et du moyen de rétromodulation (par exemple, la résistance R, figure 1), ramenée en parallèle sur le condensateur C2 et l'inductance L2. On désignera par la suite par R2, cette résistance équivalente.

Ainsi, le système de transmission sans contact et sans fil fonctionne, même si un des circuits oscillants est désaccordé, pourvu que les antennes soient très proches l'une de l'autre.

Plus précisément, la présente invention prévoit un procédé de transmission de données entre une borne de génération d'un champ électromagnétique et un transpondeur, selon la revendication 1.

Selon un mode de mise en oeuvre de la présente invention, le désaccord est provoqué quand les antennes respectives du transpondeur et de la borne sont à moins de deux centimètres l'une de l'autre.

Selon un mode de mise en oeuvre de la présente invention, on désaccorde les deux circuits oscillants.

Selon un mode de mise en oeuvre de la présente invention, on modifie le débit de transmission des données du transpondeur vers la borne et/ou de la borne vers le transpondeur selon que les circuits oscillants sont ou non accordés sur la fréquence déterminée.

Selon un mode de mise en oeuvre de la présente invention, la fréquence déterminée correspond à la fréquence d'une porteuse de téléalimentation du transpondeur.

L'invention concerne également une borne, un transpondeur et un système selon les revendications 6, 7 et 8.

Ces objets, caractéristiques et avantages, ainsi que d'autres de la présente invention seront exposés en détail dans la description suivante de modes de mise en oeuvre et de réalisation particuliers faite à titre non-limitatif en relation avec les figures jointes parmi lesquelles :
Les figures 1 à 3 décrites précédemment sont destinées à exposer l'état de la technique et le problème posé ;
la figure 4 illustre, sous forme de chronogramme, un mode de mise en oeuvre du procédé de transmission de la présente invention en couplage serré ;
la figure 5 représente partiellement un mode de réalisation d'une borne de lecture-écriture selon la présente invention, pourvue de moyens pour désaccorder le circuit oscillant de la borne ;
la figure 6 représente un premier mode de réalisation d'un transpondeur électromagnétique selon la présente invention, pourvu de moyens pour désaccorder le circuit oscillant du transpondeur ;
la figure 7 représente un deuxième mode de réalisation d'un transpondeur électromagnétique selon la présente invention, pourvu de moyens pour désaccorder le circuit oscillant du transpondeur ; et
la figure 8 représente partiellement une borne selon l'invention, pourvue de moyens pour déterminer la distance d'un transpondeur dans son champ.

Les mêmes éléments ont été désignés par les mêmes références aux différentes figures, et les figures ont été tracées sans respect d'échelle. Pour des raisons de clarté, seuls les éléments qui sont nécessaires à la compréhension de l'invention ont été représentés aux figures et seront décrits par la suite. En particulier, les circuits électroniques numériques n'ont pas été détaillés, que ce soit côté transpondeur ou côté lecteur.

Une caractéristique de la présente invention est de prévoir de désaccorder le circuit oscillant d'un transpondeur et/ou d'une borne de lecture ou lecture-écriture, lorsque ceux-ci se trouvent dans une situation de couplage serré, c'est-à-dire que leurs antennes respectives sont situées, par exemple, à moins de 2 centimètres l'une de l'autre.

La conséquence d'un tel désaccord est que le fonctionnement se rapproche de celui d'un transformateur, c'est-à-dire que le facteur de qualité intervient moins. Or, dans le fonctionnement accordé classique, on recherche un facteur de qualité le plus élevé possible pour optimiser le transfert d'énergie lié à la téléalimentation du transpondeur.

Le fait de désaccorder le transpondeur et la borne lorsque le couplage est très proche présente plusieurs avantages.

Dans un fonctionnement désaccordé, on peut diminuer la puissance de la borne, c'est-à-dire le courant dans l'antenne (L1, figure 1), tout en transmettant une énergie suffisante à la téléalimentation du transpondeur. En effet, comme le transpondeur est très proche de la borne, le problème de portée de la téléalimentation a disparu. La puissance nécessaire dépend alors essentiellement du rapport de transformation (rapport entre les nombres de spires) des inductances des circuits oscillants. La diminution du courant nécessaire dans l'antenne supprime l'effet thermique côté transpondeur.

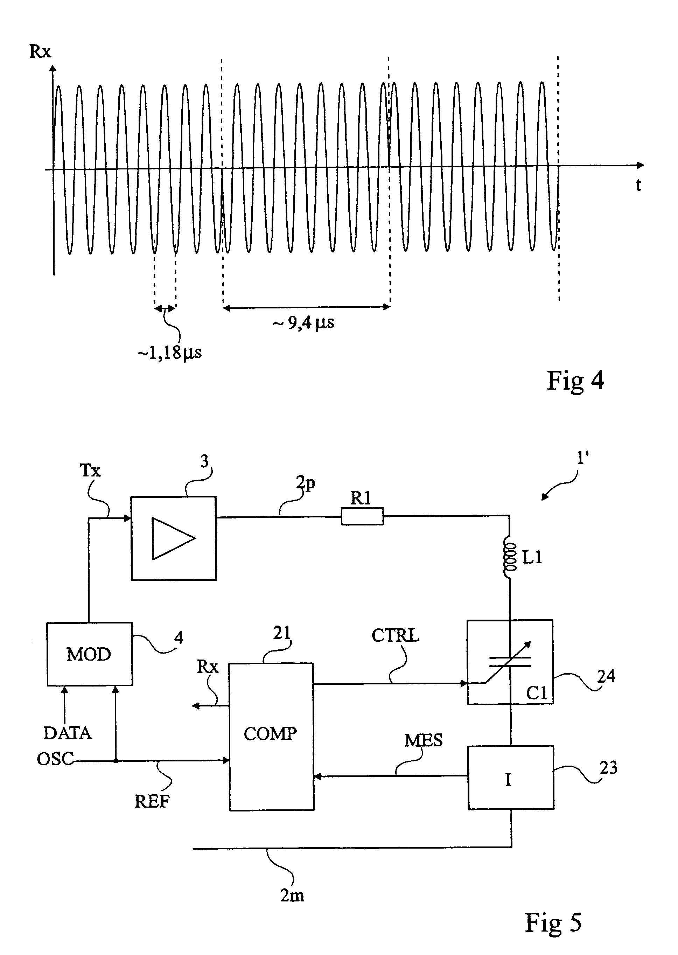

La figure 4 illustre l'allure du signal reçu Rx, côté lecteur, suite à une rétromodulation résistive, côté transpondeur, alors qu'au moins un des circuits oscillants est désaccordé de la fréquence de la porteuse de téléalimentation (par exemple, 13,56 MHz). Cette figure est à rapprocher de la figure 3. Comme on peut le constater, les temps d'établissement ont quasiment disparu. Le signal Rx a une allure sensiblement similaire à celle du signal de commande de la grille de transistor T, côté transpondeur. Par conséquent, il est désormais possible d'accroître les débits de transmission dans la mesure où il n'est plus nécessaire d'attendre, pour chaque bit transmis, que le signal Rx atteigne le seuil de détection du démodulateur de phase de la borne.

On notera que le désaccord des circuits oscillants n'est souhaitable qu'en couplage très proche, ou serré. Par conséquent, l'invention permet de dissocier aisément deux modes de fonctionnement du système selon que le transpondeur est ou non très proche du lecteur. On notera également que le coefficient de couplage diminue par le désaccord des deux circuits. Cela n'est pas gênant dans la mesure où ils sont alors très proches l'un de l'autre en fonctionnement de type transformateur.

Plusieurs solutions peuvent être utilisées pour désaccorder les circuits oscillants. En effet, comme cela a été indiqué ci-dessus, le coefficient de couplage optimal dépend des valeurs respectives des éléments R1, L1, C1 côté borne et R2, L2, C2, côté transpondeur. Il est donc possible de désaccorder soit le circuit oscillant du transpondeur, soit le circuit oscillant de la borne, soit les deux.

Selon un mode de réalisation préféré de la présente invention, on prévoit, pour des raisons d'efficacité, de désaccorder les deux circuits. En effet, selon l'invention, il faut provoquer un désaccord important par rapport à la fréquence de la porteuse de téléalimentation. Ainsi, on prévoit, de préférence, côté borne et côté transpondeur, des moyens commandables de désaccord des circuits oscillants.

La figure 5 représente partiellement un mode de réalisation d'une borne 1' de lecture-écriture de transpondeur électromagnétique, pourvue de moyens pour désaccorder le circuit oscillant par rapport à la fréquence de la porteuse (par exemple, 13,56 MHz). Ce mode de réalisation consiste à faire varier la valeur de la capacité (C1, figure 1) du circuit oscillant.

Comme précédemment, la borne 1' comporte un circuit oscillant formé d'une inductance ou antenne L1, en série avec un élément capacitif 24 et une résistance R1, entre une borne 2p de sortie d'un amplificateur ou coupleur d'antenne 3 et une borne 2m à un potentiel de référence (généralement, la masse). L'amplificateur 3 reçoit un signal Tx de transmission haute fréquence, issu d'un modulateur 4 (MOD) qui reçoit une fréquence de référence (signal OSC), par exemple, d'un oscillateur à quartz (non représenté). Le modulateur 4 reçoit, si besoin, un signal DATA de données à transmettre. Les autres constituants de la borne 1' sont, sauf indication contraire, similaires à ceux décrits en relation avec la figure 1.

Selon le mode de réalisation de la figure 5, on réalise une régulation de la phase du courant dans l'antenne L1 par rapport à un signal de référence REF. Cette régulation est une régulation du signal haute fréquence, c'est-à-dire du signal de la porteuse (par exemple, à 13,56 MHz) correspondant au signal Tx en l'absence de données à transmettre. Cette régulation est effectuée en faisant varier la capacité C1 du circuit oscillant de la borne 1' de façon à maintenir le courant dans l'antenne en relation de phase constante avec le signal de référence. Le signal REF est à la fréquence de la porteuse et correspond, par exemple, au signal OSC fourni par l'oscillateur (5, figure 1) du modulateur.

Comme l'illustre la figure 5, l'élément capacitif 24 prévu en série avec la résistance R1 et l'inductance L1 est commandable au moyen du signal CTRL qui est issu d'un circuit 21 (COMP) dont le rôle est de détecter l'écart de phase par rapport au signal de référence REF et de modifier en conséquence la capacité C1 de l'élément 24.

La capacité variable 24 peut être faite de plusieurs façons. Généralement, cette capacité doit atteindre quelques centaines de picofarads et supporter, à ses bornes, une tension de plus de 100 volts. On pourra, par exemple, utiliser une diode dont on utilise la capacité de la jonction polarisée en inverse en tant que capacité variable. La diode est alors connectée, par son anode, côté borne 2m de référence et, par sa cathode, côté inductance L1. A titre de variante, on pourra utiliser un transistor MOSFET monté en diode. Qu'il s'agisse d'une diode ou d'un transistor MOSFET, l'asservissement réalisé au moyen du signal CTRL consiste à modifier la tension aux bornes de la diode ou du transistor de façon à modifier sa capacité.

La mesure de la phase dans le circuit oscillant est effectuée, par exemple, à partir d'une mesure du courant I dans ce circuit oscillant, symbolisée par un élément 23. Cet élément de mesure de courant est monté en série avec l'élément 24 et l'inductance L1. Le résultat de la mesure MES est envoyé au comparateur de phase 21 qui compare alors la phase du courant mesuré par le bloc 23 au signal de référence REF, et asservit en conséquence l'élément capacitif 24 au moyen du signal CTRL.

On notera que la boucle de régulation de phase doit être suffisamment lente pour ne pas gêner la modulation de phase à 847,5 kHz mais suffisamment rapide devant la vitesse de passage d'un transpondeur dans le champ de la borne, qui est généralement lié à la vitesse de déplacement d'une main. Par exemple, un temps de réponse de l'ordre d'une milliseconde convient, le temps de passage d'un transpondeur étant de plusieurs centaines de millisecondes.

Pour un fonctionnement désaccordé, on peut, par exemple, modifier la référence de phase du comparateur 21 de façon à modifier la consigne d'asservissement de la boucle qui régule alors sur une autre valeur, les signaux à comparer sont alors déphasés d'une valeur autre que 90° en valeur de base. On notera que, pour que le couplage optimal corresponde à une distance la plus faible possible entre la borne et le transpondeur, il faut augmenter la capacité C1 par rapport à sa valeur à l'accord. Cela revient à diminuer la fréquence de résonance du circuit oscillant de la borne. Au lieu de modifier la phase de référence du comparateur 21, on pourra décaler la tension de polarisation de l'élément 24, par exemple, au moyen d'un réseau de résistances commutées, commandé par le microprocesseur de la borne, pour rendre variable la résistance de polarisation de l'élément 24.

Dans le mode de réalisation de la figure 5, le comparateur de phase 21 sert également préférentiellement à démoduler le signal Rx provenant d'une rétromodulation éventuelle du transpondeur.

Pour désaccorder le circuit oscillant du transpondeur, une première solution consiste à connecter, en parallèle avec l'antenne du transpondeur, deux condensateurs dont l'un est associé en série avec un interrupteur de façon à le rendre commandable. Cette solution consiste à utiliser, à d'autres fins, un montage du type de celui décrit dans le document WO-A-98/29760 qui prévoit un désaccord en fréquence d'un transpondeur au moyen d'une capacité modifiable dans le circuit oscillant.

Selon l'invention, pour que le couplage optimal corresponde à une distance la plus faible possible entre la borne et le transpondeur, il faut diminuer la capacité C2 par rapport à sa valeur à l'accord. Cela revient à augmenter la fréquence de résonance du circuit oscillant du transpondeur.

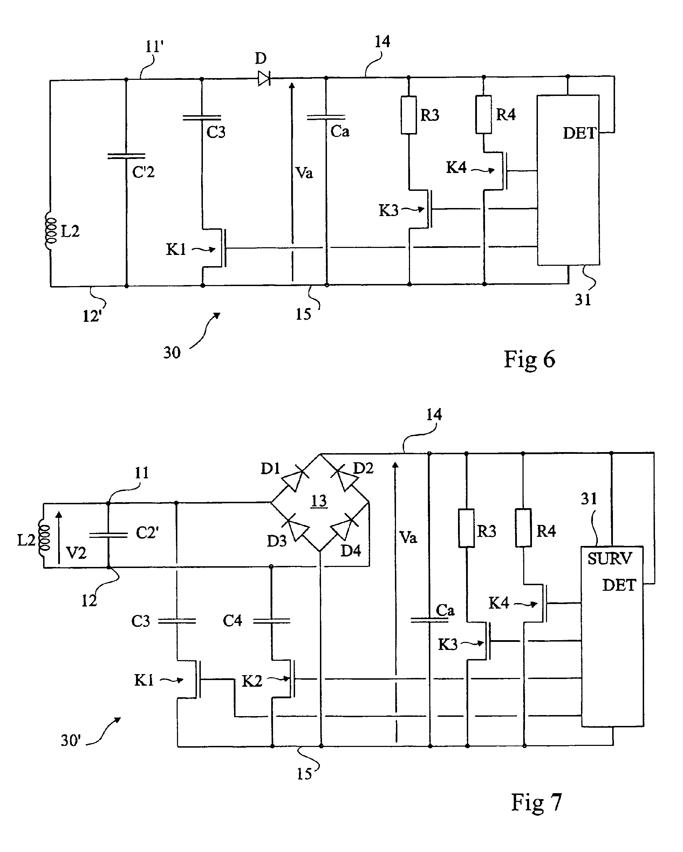

La figure 6 représente un premier mode de réalisation d'un transpondeur 30 selon l'invention. Comme précédemment, ce transpondeur est constitué à partir d'un circuit oscillant parallèle comprenant une inductance ou antenne L2 et un condensateur C2' entre deux bornes 11', 12' du circuit.

Dans le mode de réalisation illustré par la figure 6, le redressement opéré pour extraire une tension Va d'alimentation continue, lissée par un condensateur Ca, est un redressement monoalternance au moyen d'une diode D dont l'anode est reliée à la borne 11' et dont la cathode est connectée à la borne positive 14 du condensateur Ca. La référence de tension 15 correspond à la borne négative du condensateur Ca reliée directement à la borne 12'. La tension Va est destinée à un bloc électronique 31 comprenant, par exemple, les circuits 16 à 20 de la figure 1. Un condensateur C3 est monté en série avec un interrupteur (par exemple, un transistor MOS) K1 entre les bornes 11' et 12'. L'interrupteur K1 est commandé par le circuit 31 en étant fermé pour un fonctionnement accordé.

La figure 7 représente un deuxième mode de réalisation d'un transpondeur 30' selon l'invention. Selon ce mode de réalisation, les bornes 11, 12 du circuit oscillant sont reliées aux bornes d'entrée alternative d'un pont 13 constitué, par exemple, de diodes D1 à D4 comme en figure 1. Deux bornes de sortie redressée 14, 15 du pont 13 fournissent, par l'intermédiaire du condensateur de lissage Ca, la tension Va d'alimentation du bloc électronique 31.

Selon ce mode de réalisation, deux condensateurs C3 et C4 sont associés chacun en série avec un interrupteur (par exemple, un transistor MOS) K1, K2, respectivement entre les bornes 11 et 12 et la borne 15. Ainsi, une première borne du condensateur C3 est connectée à la borne 11, sa deuxième borne étant reliée, par l'intermédiaire du transistor K1, à la borne 15. Une première borne du condensateur C4 est connectée à la borne 12 tandis que son autre borne est connectée, par l'intermédiaire d'un transistor K2, à la borne 15. Les condensateurs C3 et C4 sont respectivement associées à chaque signe de la tension alternative haute fréquence V2 aux bornes de l'antenne L2. Les deux condensateurs C3 et C4 sont donc de mêmes valeurs. Les deux transistors K1 et K2 sont commandés par le bloc 31, de préférence, à partir d'un même signal, pour être fermés quand le circuit doit être accordé sur la fréquence de la porteuse de téléalimentation.

On notera que, grâce au dédoublement des condensateurs, on peut disposer d'un point de référence (ligne 15) pour la commande des interrupteurs K1 et K2. Ainsi, si les interrupteurs K1 et K2 sont constitués de transistors MOS à canal N, il est désormais possible, par un signal logique issu du bloc 31, de commander ces interrupteurs en tout ou rien, ce que ne permet pas la solution préconisée par le document WO-A-98/29760.

Par exemple, les condensateurs C2', C3 et C4 ont, chacun, une capacité correspondante à la moitié de la capacité (C2, figure 1) nécessaire pour accorder le circuit oscillant sur la fréquence de la porteuse du lecteur.

Le transpondeur 30 (figure 6) ou 30' (figure 7) comprend également, un circuit de rétromodulation résistif constitué, de préférence, de deux résistances R3, R4, respectivement en série avec un interrupteur K3, K4 entre les bornes 14 et 15. Les résistances R3 et R4 ont des valeurs différentes, respectivement relativement forte et faible.

Si on est entre la position de couplage critique et la borne, on utilise la résistance R3 qui est de forte valeur pour effectuer la rétromodulation et on ouvre le transistor K1 (ou les transistors K1 et K2). On a alors un fonctionnement désaccordé du système qui sera proche d'un fonctionnement en transformateur.

Si on est loin de la position de couplage critique en étant plus loin de la borne que cette position, cela revient à dire que le couplage est lâche. On ferme alors le transistor K1 (ou les transistors K1 et K2), et on effectue la rétromodulation résistive au moyen de la résistance R4 qui est de plus faible valeur. On est alors dans un mode de fonctionnement classique.

On notera que l'invention, en utilisant une résistance de faible valeur quand on est loin de la borne, optimise la portée du système. Le rapport entre les valeurs respectives des résistances R3 et R4 est, par exemple, compris entre 4 et 10 (R3 comprise entre 0,4 et 5 kiloohms et R4 comprise entre 100 et 500 ohms) et, de préférence, de l'ordre de 6 (par exemple, environ 1500 et 250 ohms).

Dans le dimensionnement des condensateurs du circuit oscillant, on tiendra compte du moyen de redressement utilisé et de la valeur du condensateur de lissage Ca. En effet, les périodes de conductions des diodes d'un pont (figure 7) sont généralement plus faibles devant la période de la porteuse de téléalimentation que les périodes de conduction d'une diode de redressement monoalternance (figure 6). Par conséquent, le rapport cyclique d'action des moyens de rétromodulation est différent selon le type de redressement effectué. Or, ce rapport cyclique influe, notamment, sur la valeur de la résistance équivalente R2, donc sur le coefficient de couplage.

Pour mettre en oeuvre un désaccord des circuits oscillants lorsqu'ils sont en couplage très proche, on utilise une information relative à la distance qui sépare la borne du transpondeur. Cette distance peut être déterminée par le transpondeur et/ou par la borne.

Côté transpondeur, on pourra utiliser un des modes de réalisation des figures 6 et 7. Selon l'invention, leur circuit électronique respectif est pourvu d'une entrée DET recevant la tension locale d'alimentation Va. Cette entrée DET est associée à un circuit (non représenté) de mesure de la tension Va et à au moins un élément de mémorisation de cette mesure. Dans un exemple de réalisation particulier, il pourra s'agir du microprocesseur (6, figure 1). La mémorisation des valeurs des tensions mesurées s'effectue, soit de façon analogique, mais préférentiellement de façon numérique sur plusieurs bits dont le nombre dépend de la précision d'analyse souhaitée.

Selon un mode de mise en oeuvre préféré de la présente invention, on effectue périodiquement, quand le transpondeur se trouve à portée d'une borne et, de préférence, dès que le transpondeur est activé (alimenté) par son entrée dans le champ d'un lecteur, le cycle de mesures suivant. Le transistor K1 (figure 6) ou les transistors K1 et K2 (figure 7) sont initialement fermés, le circuit oscillant étant accordé. On mémorise la tension présente sur la borne DET. Puis, on ouvre le ou les transistors K1, K2. Le circuit se trouve alors désaccordé, sa fréquence de résonance étant, dans le cas de la figure 6, repoussée à plus du double de la fréquence d'accord si les condensateurs C2' et C3 ont la même valeur. On mémorise de nouveau la tension sur la borne DET. A titre de variante, la première mesure s'effectue circuit désaccordé. On compare entre elles les deux valeurs obtenues et on mémorise, par exemple sur un seul bit, le résultat de cette comparaison.

On notera que le temps nécessaire (par exemple, de l'ordre de quelques centaines de microsecondes) à l'exécution des deux mesures "accordé" et "désaccordé" est faible par rapport à la vitesse de déplacement du transpondeur qui correspond, dans la plupart des applications, à la vitesse de déplacement d'une main.

On notera également que la durée pendant laquelle on désaccorde le circuit oscillant pour effectuer une mesure est, de préférence, choisie pour être sensiblement différente de la demi-période de la sous-porteuse, afin que cette mesure ne soit pas interprétée par la borne comme une rétromodulation. En effet, le désaccord du circuit oscillant du transpondeur se traduit par un déphasage du signal dans le circuit oscillant L1C1 (figure 1) de la borne qui, lors de la détermination de distance, ne doit pas être pris pour une transmission de données.

Le cycle de mesures ci-dessus est répété après un bref intervalle de temps (par exemple, de l'ordre d'une milliseconde) qui reste rapide par rapport au temps de passage d'un transpondeur devant une borne (plusieurs centaines de millisecondes).

On notera que, dans un mode de mise en oeuvre simplifié, on peut se contenter de déterminer, avant chaque début de transmission de données du transpondeur vers la borne, la position du transpondeur par rapport au couplage critique.

L'évolution de la valeur du bit de comparaison permet de savoir si le transpondeur se trouve plus près ou plus loin de la borne par rapport à la position de couplage critique. Si le bit indique un niveau plus élevé en position désaccordée qu'en position accordée, cela signifie que le transpondeur est très près de la borne (en couplage serré). Dans le cas contraire, le transpondeur est soit près du couplage critique, soit entre la position de couplage critique et la limite de portée du système.

A titre de mode simplifié de réalisation, on pourra ne pas utiliser une entrée (DET) dédiée pour la détermination de distance, mais utiliser une entrée existante du microprocesseur (contenu dans le bloc 31) du transpondeur. Cette entrée classique surveille la tension locale d'alimentation disponible aux bornes du condensateur Ca par rapport à un seuil prédéterminé. Le microprocesseur mémorise (sous la forme d'un bit) l'état de cette tension par rapport à ce seuil. Ce bit sert classiquement, par exemple, à détecter si la tension récupérée par le circuit oscillant est suffisante pour l'alimentation du transpondeur, donc à activer ce dernier quand il entre dans le champ d'un lecteur. Cette fonction existe, par exemple, dans des microprocesseurs de transpondeur, par exemple, les circuits ST16 et ST19 de la société STMicroelectronics, et peut donc être utilisée sans modification importante du transpondeur.

La détermination de distance par rapport au couplage critique présente l'avantage que la détection de zone (couplage serré ou couplage lâche) effectuée s'apparente à une mesure différentielle. En effet, la détection s'effectue par rapport au couplage critique qui dépend du système et de son environnement. Ce n'est qu'au couplage critique que le niveau de tension récupéré est maximal quand les circuits sont accordés. Il n'est donc pas nécessaire de prévoir une référence ou un seuil de distance particulier. En d'autres termes, ce seuil de distance entre les deux modes de fonctionnement accordé et désaccordé est alors auto-adaptatif.

Pour une détermination de distance côté borne, on pourra, par exemple, utiliser un système tel que décrit dans le document WO-A-97/34250. Toutefois, selon un mode de réalisation préféré de la présente invention, on effectue une détermination qui ne nécessite pas l'intervention du transpondeur, c'est-à-dire qui n'a pas besoin d'une réception de données provenant du transpondeur.

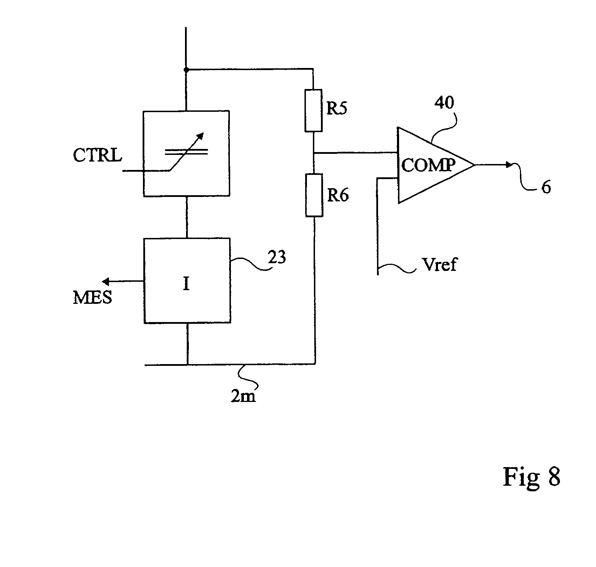

La figure 8 représente partiellement une borne selon l'invention pourvue de moyens pour déterminer la distance d'un transpondeur qui entre dans son champ. La figure 8 se base sur la figure 5 dont elle ne représente que l'élément capacitif 24 et l'élément 2 de mesure du courant.

Selon le mode de réalisation de la figure 8, la tension aux bornes de l'élément 24 est mesurée par un pont résistif (résistances R5, R6) dont le point milieu est relié à l'anode d'une diode D5 dont la cathode est reliée à une première entrée d'un comparateur (COMP) 40. Un condensateur C5 relie la cathode de la diode D5 à la masse 2m. Le condensateur C5 présente donc à ses bornes une tension continue à l'image de l'amplitude crête de la tension au point milieu du pont R5-R6. Une deuxième entrée du comparateur 40 reçoit une tension de référence Vref. Comme cela a été indiqué précédemment, quand un transpondeur entre dans le champ de la borne, la charge qu'il constitue fait varier le courant dans le circuit oscillant L1C1. Comme les circuits oscillants sont, par défaut, accordés, plus le transpondeur s'approche, plus la tension aux bornes de l'élément capacitif diminue. La tension aux bornes de la capacité C1 (élément 24) est en effet égale au produit de l'amplitude de la tension (constante) fournie par le générateur alternatif (l'amplificateur 3) par le facteur de qualité. Or quand la distance diminue, le facteur de qualité diminue également. La sortie du comparateur 40 indique donc la position du transpondeur par rapport à un seuil de distance (transformé en seuil de tension Vref). La sortie du comparateur 40 est, par exemple, envoyée au microprocesseur 6, pour basculer le fonctionnement du système dans le mode correspondant au couplage serré et commander le désaccord du ou des circuits oscillants.

On notera que le fait de maintenir constante la phase à l'accord au moyen de la boucle de régulation peut permettre de rendre la caractéristique distance-impédance monotone, c'est-à-dire sans point d'inflexion, donc d'obtenir une détermination fiable de la distance.

On notera également que, une fois la détermination de distance effectuée par le transpondeur ou la borne, celui des éléments qui n'a pas participé à la détermination peut recevoir l'information par une transmission de données de l'autre élément. Ainsi, le choix du mode de désaccord (transpondeur, borne, transpondeur et borne) est indépendant du mode de détermination de distance.

Bien entendu, la présente invention est susceptible de diverses variantes et modifications qui apparaîtront à l'homme de l'art. En particulier, les dimensionnements des différents éléments résistifs et capacitifs dépendent de l'application et, notamment, de la fréquence des différentes porteuses et de la portée du système. De même la réalisation pratique des différents circuits d'un transpondeur ou d'une borne selon l'invention est à la portée de l'homme du métier à partir des indications fonctionnelles données ci-dessus.

De plus, le choix du mode de détermination de distance et du mode de modification de l'accord des circuits oscillants dépend de l'application et de l'élément du système que l'on souhaite préférentiellement modifier. De préférence, les deux circuits oscillants seront désaccordés lors d'un couplage très proche de manière à optimiser les effets du désaccord. On notera cependant que, comme les éléments communiquent entre eux, la décision et le désaccord peuvent être mis en oeuvre par un seul élément qui communique alors à l'autre son état.

En outre, on notera que la mise en oeuvre de l'invention est parfaitement compatible avec les modulations classiques. En particulier, la transmission de données du transpondeur vers la borne peut toujours être basée sur un codage par saut de phase, que ce soit en fonctionnement accordé ou désaccordé. En effet, le désaccord ne change pas la fréquence de la porteuse haute fréquence (par exemple, 13,56 MHz) sur laquelle sont détectés les sauts de phase au rythme de la sous-porteuse (par exemple, 847,5 kHz).

La seule modification optionnelle est d'augmenter le débit de la transmission lorsque le transpondeur et la borne sont désaccordés et en couplage serré.

Parmi les applications de la présente invention, on signalera plus particulièrement les cartes à puces sans contact (par exemple, les cartes d'identification pour contrôle d'accès, les cartes porte-monnaie électronique, les cartes de stockage d'information sur le possesseur de la carte, les cartes de fidélité de consommateurs, les cartes de télévisions à péage, etc.), et les systèmes de lecture ou de lecture/écriture de ces cartes (par exemple, les bornes ou portiques de contrôle d'accès, les distributeurs automatiques de produits, les terminaux d'ordinateurs, les terminaux téléphoniques, les téléviseurs ou décodeurs satellite, etc.).

## Revendications

1. Procédé de transmission de données entre une borne (1, 1') de génération d'un champ électromagnétique et un transpondeur (10, 30, 30'), ladite borne et ledit transpondeur comportant chacun un circuit oscillant (L1C1, L2C2) formant antenne, et ledit transpondeur comprenant un circuit électronique (31) propre à absorber et à restituer de l'énergie fournit par le champ de la borne, les circuits oscillants du transpondeur et de la borne étant capable de transmettre des signaux radioélectriques de fréquence déterminée, **caractérisé en ce que** les circuits oscillants sont accordés quand le transpondeur est plus loin de la borne qu'une position de couplage critique correspondant à une distance à laquelle le transpondeur reçoit une amplitude de téléalimentation maximale pour un facteur de couplage minimal entre les deux circuits oscillants, au moins un de ces circuits oscillants étant désaccordé quand le transpondeur est entre cette position de couplage critique et la borne.

2. Procédé selon la revendication 1, **caractérisé en ce que** le désaccord est provoqué quand les antennes respectives du transpondeur et de la borne sont à moins de deux centimètres l'une de l'autre.

3. Procédé selon la revendication 1 ou 2, **caractérisé en ce qu'**il consiste à désaccorder les deux circuits oscillants (L1C1, L2C2).

4. Procédé selon l'une quelconque des revendications 1 à 3, **caractérisé en ce qu'**il consiste à modifier le débit de transmission des données du transpondeur (10, 30, 30') vers la borne (1, 1') et/ou de la borne vers le transpondeur selon que les circuits oscillants (L1C1, L2C2) sont ou non accordés sur la fréquence déterminée.

5. Procédé selon l'une quelconque des revendications 1 à 4, **caractérisé en ce que** la fréquence déterminée correspond à la fréquence d'une porteuse de téléalimentation du transpondeur (10, 30, 30').

6. Borne (1') de génération d'un champ électromagnétique comportant un circuit oscillant (L1, C1) formant antenne, ladite borne étant destinée à une transmission de données avec un transpondeur dépourvu de moyens d'alimentation autonome et comportant également un circuit oscillant (L2, C2) accordé sur une fréquence déterminée, **caractérisée en ce qu'**elle comporte des moyens (24) pour désaccorder son circuit oscillant par rapport à fréquence déterminée lorsque le transpondeur avec lequel elle doit communiquer est à une distance inférieure à une distance à laquelle l'amplitude de téléalimentation reçue par le transpondeur est maximale pour un facteur de couplage minimal entre les deux circuits oscillants.

7. Transpondeur (30, 30') électro-magnétique dépourvu de moyens d'alimentation autonome et comportant un circuit oscillant (L2, C2) formant antenne et un circuit électronique (31) propre à absorber et à restituer de l'énergie fournie par un champ électro-magnétique généré par une borne également pourvue d'un circuit oscillant capable de transmettre des signaux radio électriques de fréquence déterminée, **caractérisé en ce qu'**il comporte des moyens (K1, K2, C3, C4) pour désaccorder son circuit oscillant par rapport à fréquence déterminée lorsque la borne avec laquelle il doit communiquer est à une distance inférieure à une distance à laquelle l'amplitude de télé-alimentation reçue par le transpondeur est maximale pour un facteur de couplage minimal entre les deux circuits oscillants.

8. Système de transmission de données sans fil et sans contact entre une borne (1, 1') de génération d'un champ électromagnétique et au moins un transpondeur (30, 30') dépourvu de moyens d'alimentation autonome, la borne et le transpondeur comportant chacun un circuit oscillant (L1, C1 ; L2, C2) formant antenne capable de transmettre des signaux radioélectriques de fréquence déterminée, **caractérisé en ce qu'**au moins un des éléments parmi le transpondeur et la borne comporte des moyens (24, K1, C2, C4) pour désaccorder son circuit oscillant par rapport à la fréquence déterminée quand la distance séparant le transpondeur et la borne est inférieure à une distance à laquelle le transpondeur reçoit une amplitude de téléalimentation maximale pour un facteur de couplage minimal entre les deux circuits oscillants.

9. Système selon la revendication 8, dans lequel le transpondeur et la borne comportent lesdits moyens de désaccord.

## Claims

1. A method of data transmission between a terminal (1, 1') for generating an electromagnetic field and a transponder (10, 30, 30'), said terminal and said transponder each including an oscillating circuit (L1C1, L2C2) forming an antenna, and said transponder including an electronic circuit (31) adapted to drain and give back power provided by the terminal field, the oscillating circuits of the transponder and of the terminal being capable of transmitting radio-electric signals of determined frequency, **characterized in that** the oscillating circuits are tuned when the transponder is further away from the terminal than a critical coupling position corresponding to a distance at which the transponder receives a maximum remote supply amplitude for a minimum coupling factor between the two oscillating circuits, at least one of said oscillating circuits being detuned when the transponder is between this critical coupling position and the terminal.

2. The method of claim 1, **characterized in that** the detuning is caused when the respective antennas of the transponder and of the terminal are at less than two centimeters away from each other.

3. The method of claim 1 or 2, **characterized in that** it consists of detuning both oscillating circuits (L1C1, L2C2).

4. The method of any of claims 1 to 3, **characterized in that** it consists of modifying the data transmission rate from the transponder (10, 30, 30') to the terminal (1, 1') and/or from the terminal to the transponder according to whether the oscillating circuits (L1C1, L2C2) are or not tuned on the determined frequency.

5. The method of any of claims 1 to 4, **characterized in that** said determined frequency corresponds to the frequency of a remote supply carrier of the transponder (10, 30, 30').

6. A terminal (1') for generating an electromagnetic field including an oscillating circuit (L1, C1) forming an antenna, said terminal being adapted to a data transmission with a transponder having no independent supply means and also including an oscillating circuit (L2, C2) tuned on a determined frequency, **characterized in that** it includes means (24) for detuning its oscillating circuit with respect to the determined frequency when the transponder with which it should communicate is at a distance lower than a distance at which the remote supply amplitude received by the transponder is maximum for a minimum coupling factor between the two oscillating circuits.

7. An electromagnetic transponder (30, 30') having no independent supply means and including an oscillating circuit (L2, C2) forming an antenna and an electronic circuit (31) adapted to drain and give back power provided by an electromagnetic field generated by a terminal also including an oscillating circuit adapted to transmit radio-electric signals at a determined frequency, **characterized in that** it includes means (K1, K2, C3, C4) for detuning its oscillating circuit when the terminal with which it should communicate is at a distance lower than a distance at which the remote supply amplitude received by the transponder is maximum for a minimum coupling factor between the two oscillating circuits.

8. A system of wireless and contactless data transmission between a terminal (1, 1') of generation of an electromagnetic field and at least one transponder (30, 30') having no independent supply means, the terminal and the transponder each including an oscillating circuit (L1, C1 ; L2, C2) forming an antenna, adapted to transmitting radio-electric signals of determined frequency, **characterized in that** at least one of the elements comprising the transponder and the terminal includes means (24, K1, K2, C3, C4) for detuning its oscillating circuit with respect to the determined frequency when the distance between the transponder and the terminal is lower than a distance at which the transponder receives a maximum remote supply amplitude for a minimum coupling factor between the two oscillating circuits

9. The system of claim 8, wherein the transponder and the terminal include said detuning means.

## Patentansprüche

1. Ein Verfahren zur Datenübertragung (1, 1') zur Erzeugung eines elektromagnetischen Feldes und einem Transponder (10, 30, 30'), wobei das Terminal und der Transponder jeweils einen Schwingkreis (L1C1, L2C2), eine Antenne bildend, beinhalten und der Transponder eine elektronische Schaltung (31) beinhaltet, die angepasst ist zum Ableiten und Zurückgeben von Leistung, die durch das Terminalfeld vorgesehen ist, wobei die Schwingkreise von dem Transponder und von dem Terminal geeignet sind zum Senden von funkelektrischen bzw. hochfrequenten elektrischen Signalen von einer bestimmten Frequenz, **dadurch gekennzeichnet, dass** die Schwingkreise abgestimmt bzw. eingestellt werden, wenn der Transponder weiter weg von dem Terminal ist als eine kritische Kopplungsposition, die einer Distanz entspricht, bei der der Transponder eine maximale Fernversorgungsamplitude für einen minimalen Kopplungsfaktor zwischen den zwei Schwingkreisen empfängt, wobei wenigstens einer von den Schwingkreisen verstimmt bzw. verstellt ist, wenn der Transponder zwischen dieser kritischen Kopplungsposition und dem Terminal ist.

2. Verfahren nach Anspruch 1, **dadurch gekennzeichnet, dass** die Verstimmung bewirkt wird, wenn die entsprechenden Antennen von dem Transponder und dem Terminal weniger als zwei Zentimeter voneinander entfernt sind.

3. Verfahren nach Anspruch 1 oder 2, **dadurch gekennzeichnet dass** es besteht aus dem Verstimmen beider Schwingkreise (L1C1, L2C2).

4. Verfahren nach irgendeinem der Ansprüche 1 bis 3, **dadurch gekennzeichnet, dass** es besteht aus einem Modifizieren der Datenübertragungsrate von dem Transponder (10, 30, 30') zu dem Terminal (1, 1') und/oder von dem Terminal zu dem Transponder und zwar entsprechend, ob die Schwingkreise (L1C1, L2C2) auf die bestimmte Frequenz abgestimmt sind, oder nicht abgestimmt sind.

5. Verfahren nach irgendeinem der Ansprüche 1 bis 4, **dadurch gekennzeichnet dass** die bestimmte Frequenz der Frequenz von einem Fernversorgungsträger von dem Transponder (10, 30, 30') entspricht.

6. Ein Terminal (1') zum Erzeugen eines elektromagnetischen Feldes einschließlich eines Schwingkreises (L1, C1), der eine Antenne bildet, wobei das Terminal angepasst ist zur Datenübertragung mit einem Transponder, der keine unabhängigen Versorgungsmittel besitzt und auch einen Schwingkreis (L2, C2) beinhaltet, der auf eine bestimmte Frequenz abgestimmt bzw. eingestellt ist, **dadurch gekennzeichnet, dass** es Mittel (24) beinhaltet zum Verstimmen bzw. Verstellen seines Schwingkreises mit Bezug auf die bestimmte Frequenz, wenn der Transponder mit dem es kommunizieren sollte, bei einer Distanz ist, die niedriger als eine Distanz ist, bei der die Fernversorgungsamplitude die durch den Transponder empfangen wird, maximal ist, für einen minimalen Kopplungsfaktor zwischen den zwei Schwingkreisen.

7. Ein elektromagnetischer Transponder (30, 30'), der keine unabhängigen Versorgungsmittel besitzt, und einen Schwingkreis (L2, C2), der eine Antenne bildet, und eine elektronische Schaltung (31) beinhaltet, die angepasst ist zum Ableiten und Zurückgeben von Leistung, die durch ein elektromagnetisches Feld vorgesehen ist, das durch ein Terminal erzeugt wird, das auch einen Schwingkreis beinhaltet, der angepasst ist zum Senden von funkelektrischen bzw. hochfrequenten elektrischen Signalen bei einer bestimmten Frequenz, **dadurch gekennzeichnet, dass** er Mittel (K1, K2, C3, C4) beinhaltet zum Verstimmen bzw. Verstellen seines Schwingkreises, wenn das Terminal mit dem er kommunizieren sollte, bei einer Distanz ist, die kleiner ist als eine Distanz bei der die Fernversorgungsamplitude, die durch den Transponder empfangen wird, maximal ist und zwar für einen minimalen Kopplungsfaktor zwischen den zwei Schwingkreisen.

8. Ein System von drahtloser und kontaktloser Datenübertragung zwischen einem Terminal (1, 1') zur Erzeugung von einem elektromagnetischen Feld und mit wenigstens einem Transponder (30, 30'), der keine unabhängigen Versorgungsmittel besitzt, wobei das Terminal und der Transponder jeweils einen Schwingkreis (L1, C1; L2, C2) beinhalten, der eine Antenne bildet, angepasst zum Senden von funkelektrischen bzw. hochfrequenten elektrischen Signalen von bestimmter Frequenz, **dadurch gekennzeichnet, dass** wenigstens eines von den Elementen, das den Transponder und das Terminal aufweist, Mittel (24, K1, K2, C3, C4) beinhaltet zum Verstimmen bzw. Verstellen seines Schwingkreises mit Bezug auf die bestimmte Frequenz, wenn die Distanz zwischen dem Transponder und dem Terminal kleiner ist als eine Distanz bei der der Transponder eine maximale Fernversorgungsamplitude für einen minimalen Kopplungsfaktor zwischen den zwei Schwingkreisen empfängt.

9. System nach Anspruch 8, wobei der Transponder und das Terminal die Verstimmungsmittel beinhalten.
